# EUROPEAN PATENT SPECIFICATION

(11) **EP 1 164 536 B1**
(45) Date of publication and mention of the grant of the patent: **20.04.2005**
(21) Application number: 01202156.4
(22) Date of filing: 01.06.1998
(51) Int. Cl.: G06K 7/10

(54) **An apparatus for reading an optical code**
Vorrichtung zum Lesen eines optischen Codes
Appareil de lecture d'un code optique

(43) Date of publication of application: 19.12.2001
(62) Divisional of application: 98830336.8
(73) Proprietor: DATALOGIC S.P.A., 40012 Lippo di Calderara di Reno (Bologna) (IT)
(72) Inventor: Piva, Marco, 61010 Maciano di Pennabilli (Pesaro) (IT); Bianchi, Maurizio, 40126 Bologna (IT)
(74) Representative: Checcacci, Giorgio

(56) References cited:
- WO-A-95/35506
- US-A- 5 291 009

## Description

This invention relates to an apparatus for reading an optical code. More particularly, the invention relates to an apparatus for reading an optical code within a pre-set distance range.

As is known, optical codes can be read by means of either stationary or portable reading apparatus. In either cases, the apparatus include a casing with a reading window through which either a means of illuminating a code to be read and a means of reading the image of the code being read by detecting light scattered therefrom and converting it to electric signals are arranged to act. The detection means for converting the light signal to an electric signal may be of different types; in general, a so-called CCD (Charge-Coupled Device) is used which comprises an array of a very large number of light-sensitive elements.

Reading apparatus of the above-described type have a drawback in that they can only provide a correct reading of the optical codes within a limited distance range; this restricts substantially their applicability.

A problem to be solved in code reading as effected by a human operator and in automatic object sorting and handling systems, is that of identifying and classifying with a single apparatus objects wherein the distance between the reading apparatus and the optical code can considerably vary. In this situation, the use of an apparatus as above described is disadvantageous, since the apparatus is not always capable of correctly focusing on the object codes to be identified.

WO 97/19416 discloses an illumination system for a camera for optical character recognition (OCR) of indicia on a substrate, such as semiconductor wafers. The illumination system comprises more light sources; in particular, the illumination system comprises light emitting diodes for illuminating soft marks and broad spectrum incandescent lamps for illuminating hard marks on the substrate. The illumination system further includes a light control unit for controlling the light intensity of the light sources and properly selecting the light sources to be activated, so as to correctly illuminate the substrate depending on the type of marks to be read.

WO 96/13799 discloses a portable optical code reader provided with an array of illuminators having three different functions and with an array of sensor elements to provide image signals. In particular, the array of illuminators comprises: perimeter illuminators for the purpose of illuminating the target area of the field of view of the sensor with a broader or frame effect, focusing illuminators for the purpose of indicating a fixed focus distance and exposure illuminator for the purpose of reading the code. The perimeter and focusing illuminators are used for determining the correct distance between reader and bar code (by manually moving the reader with respect to the code); at this time the exposure illuminators are turned on.

US 5,640,001 discloses an hand-held bar code reader system capable of reading bar codes supplied within a certain measurement range. A distance measuring system is used to automatically adjust a focus lens system depending on the measured distance between the code and the reader. The reader includes a pair of marker light emitting diodes for directing visible marker light beams into the field of view of the reflected light image sensor so as to delineate the desired locations for the code in the reader field of view, and two flashable illuminator for illuminating the code.

WO 95/35506 discloses an optical reader for reading scribe marks on a semiconductor wafer. The reader comprises a plurality of light sources, an image collecting lens and a CCD camera. The light sources are arranged on both sides of a image collecting lens, which is placed in front of a CCD camera and is adapted to more completely fill the field of view of the CCD camera thereby facilitating interpretation of the image by optical character recognition (OCR) or an observer. The reader is to be positioned as close as possible to the scribe marks to reduce the required light intensity of light sources.

US 5,291,009 (against which the claims of the present invention are delimited) discloses an optical scanning head of a scanning system for reading bar code symbols at variable distance. The scanning head is equipped with a series of LEDs mounted in different directions to either side of a dark room including an image collecting lens. A linear CCD is mounted behind of the dark room. A window is provided at the front region of the scanning head and in the front of the LEDs for filtering and positioning the light path of the incident beam.

A bar code reader which uses a line CCD sensor and LEDs is also known from US patent 5,756,981.

The underlying technical problem of this invention is that of enabling proper reading of optical codes placed at varying distances within a broad range of distances, using an apparatus of simple and low-cost construction.

This problem is solved by an apparatus as defined in claim 1.

Preferred embodiments of this apparatus are set out in the dependent claims.

Thus, an apparatus for reading remotely placed optical codes is provided which is capable of reading a code from a fixed position as well as within a broad range of distances.

For this purpose, the apparatus of the invention has a depth of field which is considerably greater than that of conventional reading apparatus. The apparatus of the invention is therefore particularly suitable for reading optical codes within a broad range of distances. The improved depth of field is achieved by the fact that the light beam emitted by the illuminated means and the light diffused by the illuminated code as well as the sensitive line of the linear sensor lie all on the same plane. In this way, the light diffused by each portion of the illuminated optical code is projected through the objective lens onto the sensitive line of the linear sensor, regardless of the distance between the optical code and the reading apparatus, thereby detecting the light diffused back from the code and converting it into electric signals.

Preferably, said first and second light sources are symmetrically arranged with respect to the optical axis of the focusing optical apparatus.

Advantageously, the apparatus of the invention comprises a means for widening the emission angle of the light emitted from said first and second light sources in the plane X-Z along the direction parallel to the sensitive line of the linear sensor, and for narrowing the emission angle of the light emitted from said first and second light sources along a direction Y which is perpendicular to the plane X-Z. Preferably, the means for widening and narrowing the emission angle of said light comprises at least one converging lens placed downstream said first and second light sources. More preferably, this means comprises a pair of converging lenses placed downstream said first and second light sources at symmetric locations with respect to the optical axis Z of the focusing optical apparatus. Thus, these lenses will widen and flatten the light beam from the light sources to give it a shape comparable to that of the sensitive line of the linear sensor, thereby improving the reading reliability.

Advantageously, said illuminating means comprises a plurality of first and second light sources arranged in pairs including a pair of outward sources disposed in an offset position from the optical axis Z of the focusing optical apparatus by an angle α, and a pair of inward sources disposed in an offset position from the optical axis Z of the focusing optical apparatus by an angle β smaller than the angle α. Even more advantageously, the angle α is in the range of about 15° to about 18°, and the angle β is in the range of about 3° to about 6°. In this way, the whole optical code can be suitably illuminated along its extension, even when placed at a considerable distance away from the reading apparatus.

In a specially advantageous embodiment, the apparatus of the invention further comprises a means for confining within a predetermined reading area the light emitted from said first and second light sources. Preferably, this means comprises a ring-shaped masking element having a substantially straight inward edge set at an angle substantially equal to α with respect to the optical axis Z of the focusing optical apparatus. As such, a confined light beam can be obtained which has a well defined shape and an extension substantially equal to that of the vision field of the linear sensor; this contributes to ensure optimum illumination of the whole optical code at any values of distance between code and reading apparatus, thereby increasing the reading reliability.

The aforementioned advantages are also achieved by the provision, in the reading apparatus, of a holder element for said first and second light sources which is formed with respective seats for said light sources, said seats having respective side walls shaped to confine within said predetermined reading area the light emitted from each source of said plurality of light sources. Advantageously, said side walls also function to screen off the linear sensor, thereby preventing interference of any spurious rays issued from one of the light sources with the light diffused from the code, which would affect the reading.

According to one embodiment of the invention, the linear sensor comprises a CCD sensor. Alternatively, linear sensor comprises a CMOS sensor.

Preferably, the light sources comprises two pairs of discrete plastics LEDs.

In a preferred embodiment, the apparatus of this invention advantageously includes a means for decoding the optical code.

Preferably, the apparatus of the invention further comprises a casing with a reading window adapted to allow emission of the light emitted from said first and second light sources and collection into the casing of the light diffused from the illuminated optical code.

In a first embodiment of the invention, said casing is portable. In a second embodiment thereof, said casing is stationary.

Further features and advantages of this invention will be better understood from the following detailed description of a preferred embodiment thereof, given with reference to the accompanying drawings. In the drawings:
Figure 1 is a perspective view of an internal card of an optical code reading apparatus according to the invention with the construction elements of the apparatus mounted thereon;
Figure 2 is a front view of the card shown in Figure 1;
Figure 3 is a side view of the card shown in Figure 1;
Figure 4 is a top plan view of the card in Figure 1, with a ring-shaped masking element associated with one end thereof to confine a light beam within a predetermined reading area;
Figure 5 is an enlarged exploded view of a portion of the card shown in Figure 4;

Shown at 1 in the drawing figures is a holder card intended for installation inside a casing (not shown) of an optical code reading apparatus (not shown). The casing is formed of lower and upper shells which can be conventionally joined together into an enclosure capable of screening off any light rays other than those belonging to the reflected image of the optical code.

Throughout this description and the appended claims, the term "optical code" is used to indicate a code (such as a bar code, a two-dimensional code, or the like) adapted to univocally identify the objects that bear it. In particular, reference will be made herein to bar codes for the sake of clarity.

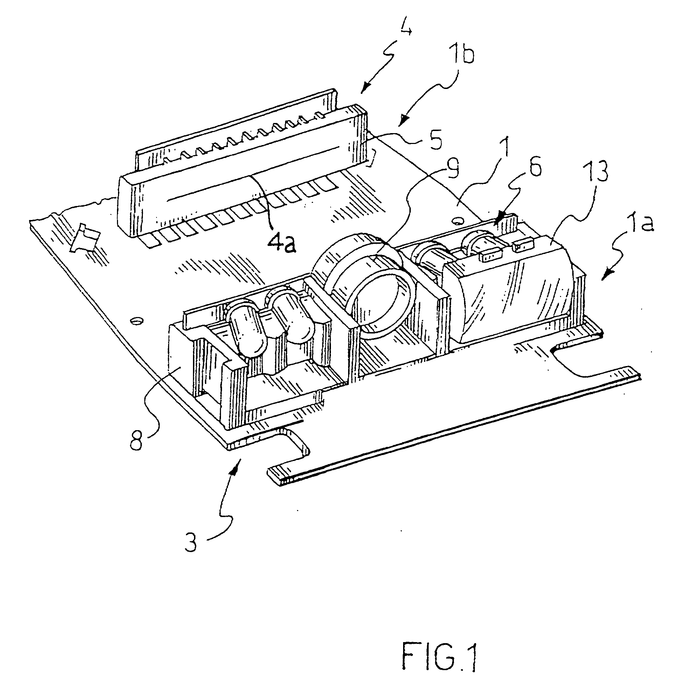

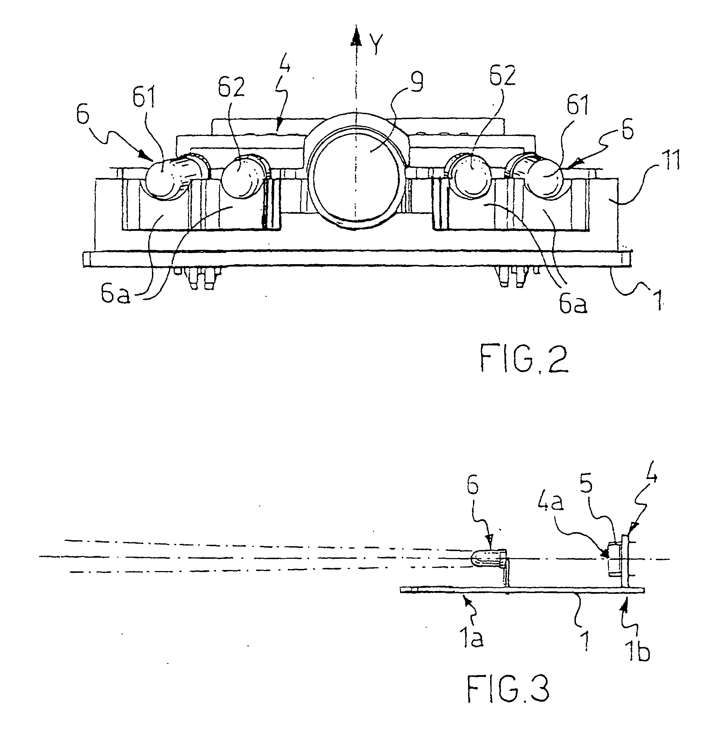

As shown in Figures 1 to 5, the holder card 1 comprises a front portion 1a intended to be faced toward the optical code to be read, and a back portion 1b. The front portion 1a is provided with an illumination means 3 adapted to illuminate the optical code through a reading window (not shown) which is formed through the reading apparatus casing at the free end of the front portion 1a of the holder card 1. The back portion 1b is provided with a detection means 4 adapted to detect light scattered from the illuminated optical code and passed inside the casing through the reading window for converting this light into electric signals representing the light image.

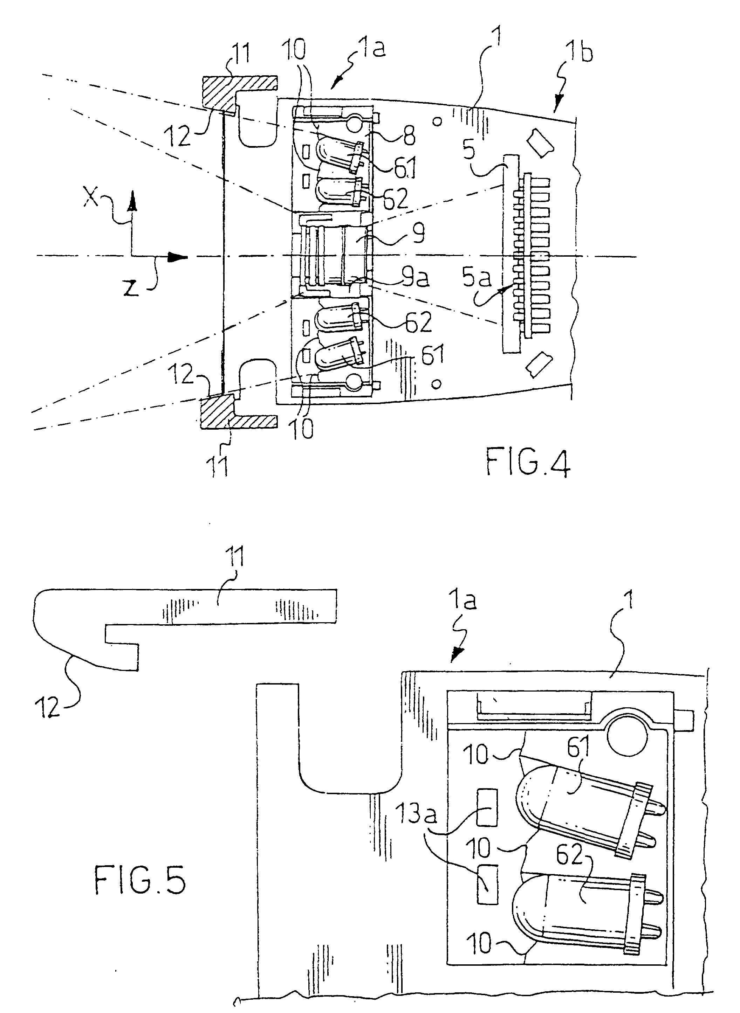

Preferably, the detection means 4 comprises a linear type of CCD sensor 5, which in turn comprises an array formed of a very large plurality of individual light-sensitive elements 5a (Figure 4). Alternatively, the detection means 4 could comprise a CMOS linear sensor; in any case, a sensitive line 4a responsive to the light scattered from the optical code is defined on the detection means 4.

The illumination means 3 comprises an array of light sources 6. The array of light sources 6 specifically comprises a number of discrete plastics LEDs (for example four), exhibiting high properties of light intensity and directivity, which have a diameter of about 5 mm and are housed in respective seats 6a formed in a holder element 8 made of a plastics material and mounted on the holder card 1 at the front portion 1a.

The holder element 8 is formed centrally with a seat 9a for receiving an objective lens 9 arranged to pick up light scattered from the illuminated optical code and project this light onto the detection means 4. The objective lens 9 has an optical axis Z which is substantially coincident with a longitudinal centerline of the holder card 1.

The LEDs 6 are positioned on the holder 8 symmetrically with respect to the optical axis Z of the objective lens 9; they are also aligned along a direction X which is perpendicular to said optical axis Z, thereby to define a first emission plane X-Z intersecting the optical axis Z and the responsive line 4a of the light-sensitive elements 5a. In particular, the LEDs 6 comprise a pair of outward LEDs 61 disposed in an offset position from the optical axis Z of the objective lens 9 by an angle α within the range of about 15° to about 18°, and a pair of inward LEDs 62 disposed in an offset position from the optical axis Z of the objective lens 9 by an angle β within the range of about 3° to about 6°.

The seats 6a have opposite side walls 10 which are shaped to confine the light beam issuing from each LED 6 within a predetermined reading area. For the same purpose, the reading apparatus of the invention includes a ring-shaped masking element 11, generally made of a rubber, which is associated with the casing, at the front portion 1a of the holder card 1, and provided with a straight inner edge 12, set at an angle with respect to the optical axis Z of the objective lens 9, which is substantially the same as the angle α.

The holder element 8 is also provided with a pair of converging lenses 13 received in respective seats 13a formed in the holder element 8, between the seats 6a for the LEDs 6 and the reading window, at symmetrical locations with respect to the optical axis Z; the lenses 13 are designed to reduce the emission angle of the light beam issuing from the LEDs 6 in a direction Y perpendicular to the first emission plane X-Z, and to increase it in the direction X.

The apparatus 1 also comprises conventional means for decoding the optical code to be read.

In operation, the optical code is illuminated to define a reading scan lying on the plane X-Z; light scattered from the code lies also on the plane X-Z and is picked up, through the objective lens 9, on the sensitive line 4a of the detection means 4 to generate an electric signal representing the light image scattered back from the code. This signal is then amplified and converted to a digital signal by a digitalizer; the digitalized signal is subsequently supplied to the microprocessor for further processing and/or decoding.

## Claims

1. An apparatus for reading optical codes at variable distances from the apparatus, comprising:
- an illuminating means (3) adapted to emit light toward an optical code to be read;
- a linear sensor (4) responsive to the light diffused from the illuminated optical code and having a sensitive line (4a) extended along a first direction (X);
- an optical apparatus (9) for focusing the diffused light on the linear sensor (4), said optical apparatus (9) having an optical axis (Z) which is substantially perpendicular to said sensitive line (4a) and defining with said sensitive line (4a) a plane (X-Z);
- said illuminating means (3) comprising at least one first light source (6) disposed on one side of the optical axis (Z) of the optical apparatus (9) and at least one second light source (6) disposed on the other side of the optical axis (Z) of the optical apparatus (9), each of said at least one first and second light sources (6) having an axis corresponding substantially to a maximum of the light intensity distribution of the respective light source (6), said at least one first and second light sources emitting light while said optical code is being read, each of said light sources being a light remitting diode comprising a body and connecting leads;
said apparatus comprising a holder element (8) for housing said optical apparatus (9) and said at least one first and second light sources (6),
**characterised in that** said holder element (8) comprises respective seat elements (6a) provided thereon for supporting said body of said light sources (6) such that the axes of said light sources (6) substantially lie on said plane (X-Z) , said seat elements being distinct from said connecting leads.

2. An apparatus according to claim 1, wherein said seat elements (6a) comprise respective portions for supporting said bodies of said light sources (6) in a fixed position in said plane (X-Z), along a direction (Y) which is perpendicular to the plane (X-Z).

3. An apparatus according to claim 2, wherein said portions for supporting said bodies of said light sources (6) along a direction (Y) comprise lower seat portions.

4. An apparatus according to any of claims from 1 to 3, wherein said seat elements (6a) comprise respective portions for supporting said bodies of said light sources (6) in corresponding fixed positions in said plane (X-2), along said first direction (X) parallel to the sensitive line (4a) of the linear sensor (4).

5. An apparatus according to claim 4, wherein said portions for supporting said bodies of said light sources, (6) along said first direction (X) comprise lateral seat portions for housing at least in part the body of a respective light source (6) between them.

6. An apparatus according to any of claims from 2 to 5, wherein said respective portions comprise portions of curved surface.

7. An apparatus according to anyone of the previous claims, wherein said first and second light sources (6) are symmetrically arranged with respect to the optical axis (Z) of the optical apparatus (9).

8. An apparatus according to anyone of the previous claims, further comprising a means for widening the emission angle of the light emitted from said first and second light sources (6) in the plane (X-Z) along the first direction (X) parallel to the sensitive line (4a) of the linear sensor (4), and for narrowing the emission angle of the light emitted from said first and second light sources (6) along a direction (Y) which is perpendicular to the plane (X-Z).

9. An apparatus according to Claim 8 , wherein the means for widening and narrowing the emission angle of said light comprises at least one converging lens (13) placed downstream said first and second light sources (6).

10. An apparatus according to Claim 9 , wherein the means for widening and narrowing the emission angle of said light comprises a pair of converging lenses (13) placed downstream said first and second light sources (6) at symmetric locations with respect to the optical axis (Z) of the optical apparatus (9).

11. An apparatus according to anyone of Claims from 8 to 10 , wherein said holder element (8) further supports said means for widening and narrowing the emission angle of said light.

12. An apparatus according to Claim 11 , wherein said holder element (8) is provided with seats (13A) for receiving said means for widening and narrowing the emission angle of said light.

13. An apparatus according to anyone of the previous Claims, wherein said at least one first and second light sources (6) are arranged in at least one corresponding pair of light sources (6), each light source (6) included in said pair being disposed in an offset position from the optical axis (Z) of the optical apparatus (9) by a prefixed angle (α; β), and wherein each seat element (6a) of the respective light source (6) comprises a portion oriented at said prefixed angle (α; β).

14. An apparatus according to Claim 13 , wherein said at least one pair include a pair of outward sources (61) disposed in an offset position from the optical axis (Z) of the optical apparatus (9) by an angle α, and a pair of inward sources (62) disposed in an offset position from the optical axis (Z) of the optical apparatus (9) by an angle β smaller than the angle α.

15. An apparatus according to Claim 14 , wherein the angle α is in the range of about 15° to about 18°, and the angle β is in the range of about 3° to about 6°.

16. An apparatus according to Claim 14 or 15, wherein said illuminating means (3) comprises two pairs of discrete plastics LEDs.

17. An apparatus according to anyone of the previous Claims, wherein the linear sensor (4) comprises a CCD sensor (5).

18. An apparatus according to anyone of Claims from 1 to 16 , wherein the linear sensor (4) comprises a CMOS sensor.

19. An apparatus according to anyone of the previous Claims, further comprising a means (10, 11) for confining within a predetermined reading area the light emitted from said first and second light sources (6).

20. An apparatus according to Claims 14 and 19, wherein the means (10, 11) for confining said light comprises a ring-shaped masking element (11) having a substantially straight inward edge (12) set at an angle substantially equal to α with respect to the optical axis (Z) of the optical apparatus (9).

21. An apparatus according to Claim 19 or 20, wherein said seat elements (6a) have respective side walls (10) shaped to confine within said predetermined reading area the light emitted from each source of said plurality of light sources (6, 61, 62).

22. An apparatus according to anyone of the previous Claims, further comprising a means for decoding the optical code.

23. An apparatus according to anyone of the previous Claims, further comprising a casing with a reading window adapted to allow emission of the light emitted from said first and second light sources (6) and collection into the casing of the light diffused from the illuminated optical code.

24. An apparatus according to claim 23, wherein said casing is portable.

25. An apparatus according to claim 23, wherein said casing is stationary.

## Patentansprüche

1. Vorrichtun g zum Lesen optischer Codes bei variablen Abständen von der Vorrichtung, umfassend:
- ein Beleuchtungsmittel (3), das angepaßt ist, Licht in Richtung eines zu lesenden optischen Codes auszusenden;
- einen linearen Sensor (4), der auf das vom beleuchteten optischen Codes gestreute Licht reagiert und eine sensitive Zeile (4a) aufweist, die sich längs einer ersten Richtung (X) erstreckt;
- eine optische Vorrichtung (9) zur Fokussierung des gestreuten Lichts auf den linearen Sensor (4), wobei die optische Vorrichtung (9) eine optische Achse (Z) aufweist, die im Wesentlichen senkrecht zur sensitiven Zeile (4a) ist und mit der sensitiven Zeile (4a) eine Ebene (X-Z) definiert;
- wobei das Beleuchtungsmittel (3) zumindest eine erste Lichtquelle (6) aufweist, die auf einer Seite der optischen Achse (Z) der optischen Vorrichtung (9) angeordnet ist, und zumindest eine zweite Lichtquelle (6), die auf der anderen Seite der optischen Achse (Z) der optischen Vorrichtung (9) angeordnet ist, wobei sowohl die zumindest eine erste als auch die zweite Lichtquelle (6) eine Achse aufweisen, die im Wesentlichen einem Maximum der Lichtintensitätsverteilung der jeweiligen Lichtquelle (6) entspricht, wobei die zumindest eine erste und zweite Lichtquelle Licht aussenden, während der optische Code gelesen wird, und jede Lichtquelle eine lichtaussendende Diode ist, die einen Körper und Verbindungsanschlüsse aufweist;
- wobei die Vorrichtung ein Halteelement (8) zur Aufnahme der optischen Vorrichtung (9) und der zumindest einen ersten und zweiten Lichtquelle (6) aufweist, **dadurch gekennzeichnet, daß** das Halteelement (8) jeweilige daran vorgesehene Aufnahmeelemente (6a) zum Halten der Körper der Lichtquellen (6) in einer solchen Weise aufweist, daß die Achsen der Lichtquellen (6) im wesentlichen in der Ebene (X-Z) liegen, wobei die Aufnahmeelemente von den Verbindungsanschlüssen verschieden sind.

2. Vorrichtung nach Anspruch 1, wobei die Aufnahmeelemente (6a) jeweilige Abschnitte zum Halten der Körper der Lichtquellen (6) in einer festen Position in der Ebene (X-Z) längs einer Richtung (Y) senkrecht zur Ebene (X-Z) aufweisen.

3. Vorrichtung nach Anspruch 2, wobei die Abschnitte zum Halten der Körper der Lichtquellen (6) längs einer Richtung (Y) untere Aufnahmeabschnitte aufweisen.

4. Vorrichtung nach einem der Ansprüche 1 bis 3, wobei die Aufnahmelemente (6a) jeweilige Abschnitte zum Halten der Körper der Lichtquellen (6) an entsprechenden festen Positionen in der Ebene (X-Z) längs der ersten Richtung (X) parallel zur sensitiven Zeile (4a) des linearen Sensors (4) aufweisen.

5. Vorrichtung nach Anspruch 4, wobei die Abschnitte zum Halten der Körper der Lichtquellen (6) längs der ersten Richtung (X) seitliche Aufnahmeabschnitte zur zumindest teilweisen Aufnahme des Körpers einer jeweiligen Lichtquelle (6) dazwischen aufweisen.

6. Vorrichtung nach einem der Ansprüche 2 bis 5, wobei die jeweiligen Abschnitte Abschnitte mit einer gekrümmten Oberfläche aufweisen.

7. Vorrichtung nach einem der vorhergehenden Ansprüche, wobei die erste und zweite Lichtquelle (6) im Verhältnis zur optischen Achse (Z) der optischen Vorrichtung (9) symmetrisch angeordnet sind.

8. Vorrichtung nach einem der vorhergehenden Ansprüche, die des weiteren ein Mittel zur Erweiterung des Emissionswinkels des von der ersten und zweiten Lichtquelle (6) in der Ebene (X-Z) längs der ersten Richtung (X) parallel zur sensitiven Zeile (4a) des linearen Sensors (4) ausgesandten Lichts und zur Einengung des Emissionswinkels des von der ersten und zweiten Lichtquelle (6) längs einer Richtung (Y) senkrecht zur Ebene (X-Z) ausgesandten Lichtes aufweist.

9. Vorrichtung nach Anspruch 8, wobei das Mittel zur Erweiterung und Einengung des Emissionswinkels des Lichtes zumindest eine Konvergenzlinse (13) aufweist, die der ersten und zweiten Lichtquelle (6) nachgeordnet ist.

10. Vorrichtung nach Anspruch 9, wobei das Mittel zur Erweiterung und Einengung des Emissionswinkels des Lichtes ein Paar von Konvergenzlinsen (13) aufweist, die der ersten und zweiten Lichtquelle (6) an symmetrischen Orten im Verhältnis zu optischen Achse (Z) der optischen Vorrichtung (9) nachgeordnet sind.

11. Vorrichtung nach einem der Ansprüche 8 bis 10, wobei das Halteelement (8) des weiteren das Mittel zur Erweiterung und Einengung des Emissionswinkels des Lichtes trägt.

12. Vorrichtung nach Anspruch 11, wobei das Halteelement (8) mit Aufnahmen (13A) zur Aufnahme des Mittels zur Erweiterung und Einengung des Emissionswinkels des Lichts versehen ist.

13. Vorrichtung nach einem der vorhergehenden Ansprüche, wobei die zumindest eine erste und zweite Lichtquelle (6) in zumindest einem entsprechenden Paar von Lichtquellen (6) angeordnet sind, wobei jede im Paar enthaltene Lichtquelle (6) an einer gegenüber der optischen Achse (Z) der optischen Vorrichtung (9) um einen vordefinierten Winkel (α, β) versetzen Position angeordnet ist und jedes Aufnahmeelement (6a) der jeweiligen Lichtquelle (6) einen mit dem vordefinierten Winkel (α, β) orientierten Abschnitt aufweist.

14. Vorrichtung nach Anspruch 13, wobei das zumindest eine Paar ein Paar äußerer Quellen (61), die an einer gegenüber der optischen Achse (Z) der optischen Vorrichtung (9) um einen Winkel (α) versetzten Position angeordnet sind, und ein Paar innerer Quellen (62) aufweist, die in einer gegenüber der optischen Achse (Z) der optischen Vorrichtung (9) um einen Winkel β versetzten Position angeordnet sind, der kleiner ist als der Winkel α.

15. Vorrichtung nach Anspruch 14, wobei der Winkel α im Bereich von ungefähr 15° bis ungefähr 18° liegt und der Winkel β im Bereich von ungefähr 3° bis ungefähr 6° liegt.

16. Vorrichtung nach Anspruch 14 oder 15, wobei das Beleuchtungsmittel (3) zwei Paare getrennter Kunststoff-LEDs aufweist.

17. Vorrichtung nach einem der vorhergehenden Ansprüche, wobei der lineare Sensor (4) einen CCD-Sensor (5) aufweist.

18. Vorrichtung nach einem der Ansprüche 1 bis 16, wobei der lineare Sensor (4) einen CMOS-Sensor aufweist.

19. Vorrichtung nach einem der vorhergehenden Ansprüche, die des weiteren ein Mittel (10, 11) zur Begrenzung des von der ersten und zweiten Lichtquelle (6) ausgesandten Lichtes innerhalb eines vorbestimmten Lesebereiches umfaßt.

20. Vorrichtung nach Anspruch 14 und 19, wobei das Mittel (10, 11) zur Begrenzung des Lichtes ein ringförmiges Maskierungselement (11) mit einem im wesentlichen geraden inneren. Rand (12) aufweist, der mit einem Winkel eingerichtet ist, der im wesentlichen gleich dem Winkel α im Verhältnis zur optischen Achse (Z) der optischen Vorrichtung (9) ist.

21. Vorrichtung nach Anspruch 19 oder 20, wobei die Aufnahmeelemente (6a) jeweilige Seitenwände (10) aufweisen, die so geformt sind, daß das von jeder Lichtquelle der Mehrzahl von Lichtquellen (6, 61, 62) ausgesandte Licht im vorbestimmten Lesebereich begrenzt wird.

22. Vorrichtung nach einem der vorhergehenden Ansprüche, die des weiteren ein Mittel zur Dekodierung des optischen Codes aufweist.

23. Vorrichtung nach einem der vorhergehenden Ansprüche, die des weiteren ein Gehäuse mit einem Lesefenster aufweist, das eine Emission des von der ersten und zweiten Lichtquelle (6) ausgesandten Lichtes und ein Sammeln des vom beleuchteten optischen Code gestreuten Lichtes im Gehäuse zuläßt.

24. Vorrichtung nach Anspruch 23, wobei das Gehäuse tragbar ist.

25. Vorrichtung nach Anspruch 23, wobei das Gehäuse stationär ist.

## Revendications

1. Appareil de lecture de codes optiques disposés à des distances variables par rapport à l'appareil, comprenant :
- des moyens d'illumination (3) adaptés pour émettre une lumière vers un code optique devant être lu;
- un capteur linéaire (4) sensible à la lumière diffusée depuis le code optique illuminé et ayant une ligne sensible (4a) étendu le long d'une première direction (X);
- un appareil optique (9) pour focaliser la lumière diffusée sur le capteur linéaire (4), cet appareil optique (9) ayant un axe optique (Z) qui est sensiblement perpendiculaire à ladite ligne sensible (4a) et définissant avec cette ligne sensible (4a) un plan (X-Z);
- lesdits moyens d'illumination (3) comprenant au moins une première source lumineuse (6) disposée sur un côté de l'axe optique (Z) de l'appareil optique (9) et au moins une seconde source lumineuse (6) disposée sur l'autre côté de l'axe optique (Z) de l'appareil optique (9), chacune desdites au moins une première et seconde sources lumineuses (6) ayant un axe correspondant sensiblement à un maximum de la distribution de l'intensité lumineuse de la source lumineuse (6) respective, lesdites au moins une première et seconde sources lumineuses émettant une lumière lorsque le code optique est en cours de lecture, chacune desdites sources étant une diode électroluminescente comprenant un corps et des câbles de connexion;
l'appareil comprenant un support (8) pour loger ledit appareil optique (9) et lesdites au moins une première et seconde sources lumineuses (6), **caractérisé en ce que** le support (8) comprend des sièges (6a) respectifs prévus pour supporter le corps desdites sources lumineuses (6) de telle sorte que les axes des sources lumineuses (6) se trouve sensiblement sur le plan (X-Y), les sièges étant distincts desdits câbles de connexion.

2. Appareil selon la revendication 1, dans lequel les sièges (6a) comprennent des parties respectives pour supporter les corps des sources lumineuses (6) dans une position fixe dans le plan (X-Y), le long d'une direction (Y) qui est perpendiculaire au plan (X-Y).

3. Appareil selon la revendication 2, dans lequel lesdites parties pour supporter les corps des sources lumineuses (6) le long d'une direction (Y) comprennent des parties basses de siège.

4. Appareil selon l'une quelconque des revendications 1 à 3, dans lequel les sièges (6a) comprennent des parties respectives pour supporter les corps des sources lumineuses (6) dans des positions fixes correspondantes dans le plan (X-Y), le long de cette première direction (X) parallèle à la ligne sensible (4a) du capteur linéaire (4).

5. Appareil selon la revendication 4, dans lequel lesdites parties pour supporter les corps des sources lumineuses (6) le long de cette première direction (X) comprennent des parties latérales de siège pour loger entre elles au moins en partie le corps d'une source lumineuse (6) respective.

6. Appareil selon l'une quelconque des revendications 2 à 5, dans lequel lesdites parties respectives comprennent des parties en surface courbée.

7. Appareil selon l'une quelconque des revendications précédentes, dans lequel lesdites première et seconde sources lumineuses (6) sont symétriquement disposées par rapport à l'axe optique (Z) de l'appareil optique (9).

8. Appareil selon l'une quelconque des revendications précédentes, comprenant en outre des moyens pour élargir l'angle d'émission de la lumière émise depuis les première et seconde sources lumineuses (6) dans le plan (X-Y) le long de la première direction (X) parallèle à la ligne sensible (4a) du capteur linéaire (4), et pour rétrécir l'angle d'émission de la lumière émise depuis les première et seconde sources lumineuses (6) le long d'une direction (Y) qui est perpendiculaire au plan (X-Y).

9. Appareil selon la revendication 8, dans lequel les moyens pour élargir et rétrécir l'angle d'émission de la lumière comprennent au moins une lentille de convergence (13) placée en aval desdites première et seconde sources lumineuses (6).

10. Appareil selon la revendication 9, dans lequel les moyens pour élargir et rétrécir l'angle d'émission de la lumière comprennent une paire de lentilles de convergence (13) placée en aval desdites première et seconde sources lumineuses (6) à des emplacements symétriques par rapport à l'axe optique (Z) de l'appareil optique (9).

11. Appareil selon l'une quelconque des revendications 8 à 10, dans lequel ledit support (8) supporte en outre les moyens pour élargir et rétrécir l'angle d'émission de la lumière.

12. Appareil selon la revendication 11, dans lequel ledit support (8) est pourvu de sièges (13A) pour recevoir ces moyens pour élargir et rétrécir l'angle d'émission de la lumière.

13. Appareil selon l'une quelconque des revendications précédentes, dans lequel lesdites au moins une première et seconde sources lumineuses (6) sont disposées dans au moins une paire de sources lumineuses correspondante (6), chaque source lumineuse (6) contenue dans cette paire étant disposée dans une position décalée de l'axe optique (Z) de l'appareil optique (9) selon un angle prédéterminé (α; β), et dans lequel chaque siège (6a) de la source lumineuse (6) respective comprend une partie orientée selon cet angle prédéterminé (α; β).

14. Appareil selon la revendication 13, dans lequel ladite au moins une paire contient une paire de sources externes (61) disposée dans une position décalée de l'axe optique (Z) de l'appareil optique (9) selon un angle α, et une paire de sources internes (62) disposée dans une position décalée de l'axe optique (Z) de l'appareil optique (9) selon un angle β inférieur à l'angle α.

15. Appareil selon la revendication 14, dans lequel l'angle α est dans une gamme allant d'environ 15° à environ 18°, et l'angle β est dans une gamme allant d'environ 3° à environ 6°.

16. Appareil selon la revendication 14 ou 15, dans lequel lesdits moyens d'illumination (3) comprennent deux paires de DEL en matière plastique et de type discret.

17. Appareil selon l'une quelconque des revendications précédentes, dans lequel le capteur linéaire (4) comprend un capteur CCD (5).

18. Appareil selon l'une quelconque des revendications 1 à 16, dans lequel le capteur linéaire (4) comprend un capteur CMOS.

19. Appareil selon l'une quelconque des revendications précédentes, comprenant en outre des moyens (10, 11) pour confiner au sein d'une zone de lecture prédéterminée la lumière émise depuis lesdites première et seconde sources lumineuses (6).

20. Appareil selon l'une quelconque des revendications 14 à 19, dans lequel les moyens (10, 11) pour confiner la lumière comprennent un élément de masquage en forme d'anneau (11) ayant un rebord interne (12) sensiblement droit placé à un angle sensiblement égal à α par rapport à l'axe optique (Z) de l'appareil optique (9).

21. Appareil selon la revendication 19 ou 20, dans lequel les sièges (6a) possèdent des parois latérales respectives (10) conformées de façon à confiner au sein de cette zone de lecture prédéterminée la lumière émise depuis chaque source de ladite pluralité de sources lumineuses (6, 61, 62).

22. Appareil selon l'une quelconque des revendications précédentes, comprenant en outre des moyens pour décoder le code optique.

23. Appareil selon l'une quelconque des revendications précédentes, comprenant en outre un caisson avec une fenêtre de lecture adaptée pour permettre l'émission de la lumière émise depuis les première et seconde sources lumineuses (6) et la collecte dans le caisson de la lumière diffusée depuis le code optique illuminé.

24. Appareil selon la revendication 23, dans lequel le caisson est portable.

25. Appareil selon la revendication 23, dans lequel le caisson est immobile.
